# EUROPÄISCHE PATENTANMELDUNG

(11) **EP 4 435 538 A1**
(43) Veröffentlichungstag der Anmeldung: **25.09.2024**
(21) Anmeldenummer: 24152303.4
(22) Anmeldetag: 17.01.2024
(51) Int. Cl.: G05B 19/042, G01D 18/00, G05B 23/02

(54) **VERFAHREN ZUR STEUERUNG EINER MESSVORRICHTUNG UND MESSVORRICHTUNG**

(30) Priorität: 21.03.2023 DE 102023107051; 21.03.2023 US 202363453488 P
(71) Anmelder: Netzsch Gerätebau GmbH, 95100 Selb (DE)
(72) Erfinder: BRUNNER, Martin, 95176 Konradsreuth (DE); DENNER, Thomas, 95100 Selb (DE); HILPERT, Thilo, 95100 Selb (DE); WOHLFAHRT, Fabian, 95111 Rehau (DE); SCHÖNEICH, Michael, 95100 Selb (DE); MÜLLER, Michael, 92724 Trabitz (DE); HACHMANN, Thorsten, 95199 Thierstein (DE)
(74) Vertreter: Isarpatent

(57) **Zusammenfassung**

Die vorliegende Erfindung betrifft ein Verfahren zur Steuerung einer Messvorrichtung (100), umfassend ein Empfangen einer Anfrage, einen bestimmten Messwert zu ermitteln, durch eine Steuereinrichtung (110; 200); ein Erstellen einer Parameterliste durch die Steuereinrichtung (110; 200), welche Parameter der Messvorrichtung einzustellen sind, um den bestimmten Messwert ermitteln zu können; und ein Ausgeben der erstellten Parameterliste an einen Benutzer der Messvorrichtung (100) durch die Steuereinrichtung (110; 200). Des Weiteren betrifft die vorliegende Erfindung eine Messvorrichtung (100).

## Beschreibung

### TECHNISCHES GEBIET DER ERFINDUNG

Die vorliegende Erfindung betrifft ein Verfahren zur Steuerung einer Messvorrichtung sowie eine Messvorrichtung.

### HINTERGRUND DER ERFINDUNG

Das Bestimmen von Eigenschaften verschiedener Materialien ist für viele Anwendungen in Forschung und Industrie von großer Bedeutung. Hierfür werden vielfältige Messvorrichtungen verwendet, welche je nach Anwendungsbereich mitunter sehr komplexe Messvorgänge ermöglichen.

Um diese Messungen durchzuführen ist von einem Benutzer eine gewisse Expertise gefordert, da die technischen und wissenschaftlichen Hintergründe der einzelnen Messvorgänge berücksichtigt werden müssen, um eine erfolgreiche Durchführung der gewünschten Messung sicherstellen zu können.

Dies führt unter anderem dazu, dass für das Durchführen einer Messung nicht nur die reine Messzeit benötigt wird, sondern auch eine mitunter lange Vorbereitungszeit, in welcher ein Benutzer einer zu verwendenden Messvorrichtung, zunächst selbst bestimmen muss, welches Messverfahren für die Ermittlung eines Messwerts verwendet werden muss und wie dieses zu realisieren sein kann.

### ZUSAMMENFASSUNG DER ERFINDUNG

Vor diesem Hintergrund liegt der vorliegenden Erfindung die Aufgabe zugrunde, die Verwendung von Messvorrichtungen zu erleichtern und effizienter zu gestalten.

Diese Aufgabe wird gelöst durch ein Verfahren mit den Merkmalen des Patentanspruchs 1 sowie durch eine Messvorrichtung mit den Merkmalen des Patentanspruchs 10.

Dementsprechend ist ein Verfahren zur Steuerung einer Messvorrichtung vorgesehen. Das Verfahren umfasst ein Empfangen einer Anfrage, einen bestimmten Messwert zu ermitteln, durch eine Steuereinrichtung, ein Erstellen einer Parameterliste durch die Steuereinrichtung, welche Parameter der Messvorrichtung einzustellen sind, um den bestimmten Messwert ermitteln zu können, und ein Ausgeben der erstellten Parameterliste an einen Benutzer der Messvorrichtung durch die Steuereinrichtung.

Des Weiteren ist eine Messvorrichtung vorgesehen, welche dazu ausgebildet ist, das erfindungsgemäße Verfahren durchzuführen.

Unter einem Parameter der Messvorrichtung wird hierbei jegliche Einstellung verstanden, welche an der Messvorrichtung bzw. deren Komponenten vorgenommen werden und einen Einfluss auf die durchzuführende Messung haben kann. Dies umfasst unter anderem Faktoren wie Temperatur oder Druck, welche in einer Probenaufnahmeeinrichtung der Messvorrichtung während des Messvorgangs vorherrschen können. Parameter der Messvorrichtung können auch Angaben über die Zufuhrmenge und/oder den Zufuhrzeitraum an thermischer, elektrischer und/oder mechanischer Energie während des Messvorgangs einer zu untersuchenden Probe oder Angaben über Eigenschaften der Messwerte der zu untersuchenden Probe sein, etwa für den Fall, dass der gewünschte Messwert nicht direkt gemessen werden, sondern nur indirekt über die Messung anderer Eigenschaften der Probe abgeleitet werden kann. Prinzipiell kann durch das Erstellen der Parameterliste die Steuereinrichtung den Prozess vorgeben, mit welchem der gewünschte Messwert ermittelt werden kann.

Eine der Erfindung zugrunde liegende Idee besteht in der Unterstützung des Benutzers der Messvorrichtung durch eine dafür ausgelegte Steuereinrichtung. Da die Steuereinrichtung, die dem Benutzer mitteilt, welche Parameter der Messvorrichtung eingestellt werden müssen, kann dieser Schritt bei der Messvorbereitung drastisch abgekürzt werden. Die Ausgabe der Parameterliste an den Benutzer, welche auch begleitend zum Messvorgang erfolgen kann, entlastet den Benutzer während der Durchführung der Messung zusätzlich.

Gemäß eines Ausführungsbeispiels des Verfahrens beinhaltet die Anfrage, einen bestimmten Messwert zu ermitteln, weiterhin Informationen bezüglich der gewünschten Messgenauigkeit und/oder Messdauer. Diese Informationen sind vorteilhaft nützlich für die Erstellung der Liste von geeigneten Parametern für die Messvorrichtung.

Gemäß eines Ausführungsbeispiels des Verfahrens greift die Steuereinrichtung bei der Erstellung der Parameterliste auf eine Datenbank zurück. Durch eine geeignete Ausgestaltung der Datenbank kann die Erstellung einer geeigneten Parameterliste vorteilhaft unterstützt werden.

Gemäß einer Weiterbildung des Verfahrens beinhaltet die Datenbank eine Vielzahl an Informationen über Materialeigenschaften und Messmethoden, wobei die Steuereinrichtung basierend auf dieser Vielzahl an Informationen autonom die Parameterliste erstellt. Hierdurch kann die Steuereinrichtung vorteilhaft eine Vielzahl von hypothetisch möglichen Messungen unterstützen.

Gemäß eines Ausführungsbeispiels des Verfahrens aktualisiert die Steuereinrichtung die Datenbank nach Durchführung der Messung. Hierdurch können bei einer Messung gewonnene Erkenntnisse vorteilhaft für zukünftige Messungen genutzt werden.

Gemäß eines Ausführungsbeispiels des Verfahrens sind weiterhin eine Überwachung von Messparametern während des Ermittelns des Messwerts durch eine Sensoreinrichtung der Messvorrichtung und ein Auswerten der überwachten Messparameter durch die Steuereinrichtung, vorgesehen. Mit Messparametern sind hierbei zum einen die Parameter der Messvorrichtung wie oben erläutert gemeint, es können aber auch Eigenschaften, etwa Temperaturen, der Messvorrichtung an sich bzw. derer Komponenten gemeint sein. Hierdurch kann die Steuereinrichtung den Benutzer noch vorteilhafter bei der Messwertermittlung unterstützen.

Gemäß einer Weiterbildung des Verfahrens gibt die Steuereinrichtung eine Warnung aus, falls die überwachten Messparameter von den Parametern der erstellten Parameterliste abweichen. Hierdurch kann eine fehlerhafte Messdurchführung vorteilhaft vermieden werden.

Gemäß einer Weiterbildung des Verfahrens unterbricht die Steuereinrichtung die Ermittlung des Messwerts, falls die überwachten Messparameter von den

Parametern der erstellten Parameterliste abweichen. Hierdurch kann eine fehlerhafte Messdurchführung vorteilhaft vermieden werden.

Gemäß einer Weiterbildung des Verfahrens ändert die Steuereinrichtung die Parameter der Messvorrichtung autonom, falls die überwachten Messparameter von den Parametern der erstellten Parameterliste abweichen. Hierdurch kann eine fehlerhafte Messdurchführung vorteilhaft vermieden werden.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: ein schematisches Flussdiagramm für ein Verfahren nach einem Ausführungsbeispiel der vorliegenden Erfindung;
- Fig. 2: eine schematische Darstellung einer Messvorrichtung nach einem Ausführungsbeispiel der vorliegenden Erfindung; und
- Fig. 3: eine schematische Darstellung eines Systems mit einer Vielzahl an Messvorrichtungen nach einem Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

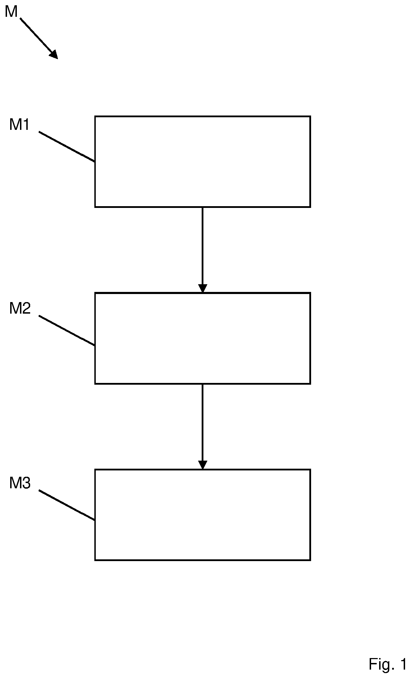

Fig. 1 zeigt ein schematisches Flussdiagramm für ein Verfahren M zum Steuern einer Messvorrichtung nach einem Ausführungsbeispiel der vorliegenden Erfindung.

In einem ersten Verfahrensschritt M1 empfängt eine Steuereinrichtung eine Anfrage, einen bestimmten Messwert zu ermitteln. In einem weiteren Verfahrensschritt M2 erstellt die Steuereinrichtung eine Parameterliste, welche Parameter der Messvorrichtung einzustellen sind, um den bestimmten Messwert ermitteln zu können. In einem weiteren Verfahrensschritt M3 gibt die Steuereinrichtung die erstellten Parameterliste an einen Benutzer der Messvorrichtung aus.

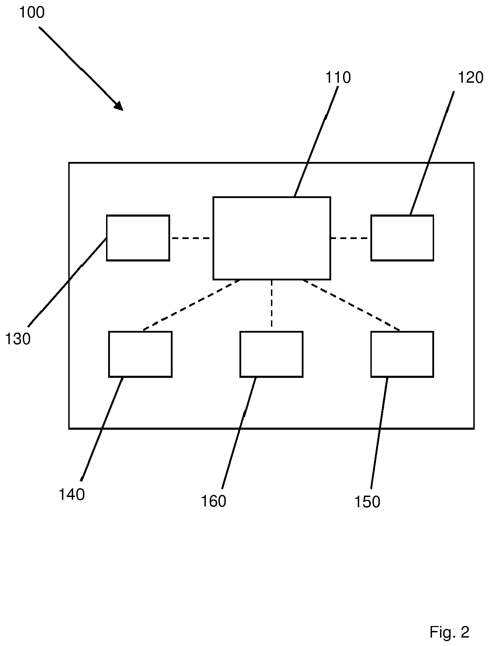

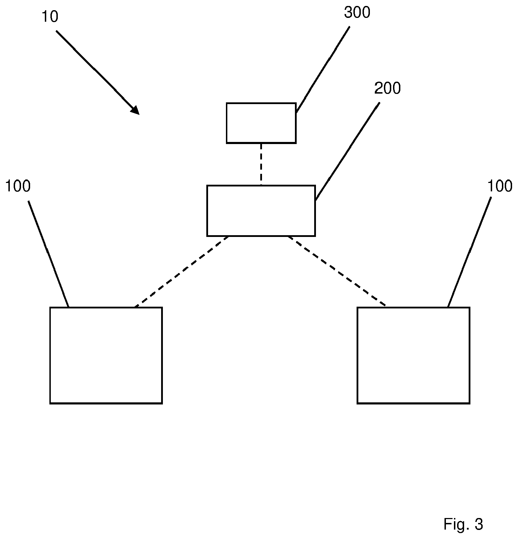

Das gezeigte Verfahren M wird im Nachfolgenden mit Bezug auf die Figuren 2 und 3 im Detail beschrieben.

Fig. 2 zeigt eine schematische Darstellung einer Messvorrichtung 100 nach einem Ausführungsbeispiel der vorliegenden Erfindung.

Die Messvorrichtung 100 weist eine Steuereinrichtung 110, eine Datenbank 120, eine Sensoreinrichtung 130, eine Ausgabeeinrichtung 140, eine Eingabeeinrichtung 150, und eine Probenaufnahmeeinrichtung 160 auf.

Die Steuereinrichtung 110 ist in dem hier gezeigten Ausführungsbeispiel in die Messvorrichtung 100 integriert und dazu ausgebildet, eine Anfrage, einen bestimmten Messwert zu ermitteln, zu empfangen. Diese Anfrage kann von einem Benutzer der Messvorrichtung 100 beispielsweise über die Eingabeeinrichtung 150 der Messvorrichtung 100 an die Steuereinrichtung 110 übergeben werden. Die Eingabeeinrichtung 150 kann hierfür beispielsweise eine Tastatur, einen Touchscreen oder ähnliches umfassen. Alternativ kann die Anfrage auch über eine externe Schnittstelle an die Steuereinrichtung 110 übertragen werden.

Die Steuereinrichtung 110 ist weiterhin dazu ausgebildet, auf die empfangene Anfrage eine Parameterliste zu erstellen, welche Parameter der Messvorrichtung einzustellen sind, um den bestimmten Messwert ermitteln zu können. Hierfür kann die Steuereinrichtung 110 auf die Datenbank 120 zurückgreifen, welche im vorliegenden Ausführungsbeispiel in Form eines internen Speichers der Messvorrichtung 100 ausgebildet ist. Die Datenbank 120 kann hierbei eine Vielzahl an Informationen über Materialeigenschaften und Messmethoden beinhalten. In diesem Fall erstellt die Steuereinrichtung die Parameterliste autonom basierend auf dieser Vielzahl an Informationen. Bei diesem Vorgang könnte die Steuereinrichtung 110 eventuell auch ermitteln, dass der gewünschte Messwert mit der Messvorrichtung 100 überhaupt nicht ermittelt werden kann. In diesem Fall kann anstelle einer Parameterliste auch eine entsprechende Benachrichtigung ausgegeben werden.

Die Steuereinrichtung 110 ist weiterhin dazu ausgebildet, die erstellte Parameterliste an einen Benutzer der Messvorrichtung 100 auszugeben. Hierfür kann beispielsweise die Ausgabeeinrichtung 140 der Messvorrichtung 100 verwendet werden. Die Ausgabeeinrichtung 140 kann hierfür beispielsweise einen Bildschirm und/oder Lautsprecher umfassen. Beispielsweise können auch die Ausgabeeinrichtung 140 und die Eingabeeinrichtung 150 in einem Touchscreen zusammengefügt sein. Alternativ oder zusätzlich können auch einzelne Komponenten der Messvorrichtung 100, wie etwa die Eingabeeinrichtung 150 und die Probenaufnahmeeinrichtung 160 hervorgehoben werden, in dem etwa zu betätigende Knöpfe oder dergleichen beleuchtet werden.

Insbesondere kann die Steuereinrichtung 110 auch dazu ausgebildet sein, die Datenbank 120 nach der Durchführung der bestimmten Messung zu aktualisieren. Die Messergebnisse bezüglich der Materialeigenschaften der bei der Messung verwendeten Probe können dann zum Beispiel in die Datenbank 120 aufgenommen werden und stehen dann für zukünftige Messungen und Messpläne zur Verfügung. Auch vorgegebene Messpläne können überarbeitet werden, wobei die durchgeführte Messung berücksichtigt wird. Die hierfür nötigen Informationen bezüglich der durchgeführten Messung können entweder von einem Benutzer der Messvorrichtung 100 an die Steuereinrichtung 110 übergeben werden. Alternativ oder zusätzlich kann die Steuereinrichtungen 110 die relevanten Informationen auch direkt von der Messvorrichtung 100, insbesondere von der Sensoreinrichtung 130, erhalten.

Die Sensoreinrichtung 130 ist dazu ausgebildet, Messparameter während des Ermittelns des Messwerts zu überwachen. In dem Fall kann die Steuereinrichtung 110 dazu ausgebildet sein, die überwachten Messparameter auszuwerten. Dies kann es der Steuereinrichtung 110 ermöglichen, eine Warnung auszugeben, falls die überwachten Messparameter von den Parametern der erstellten Parameterliste abweichen. Alternativ oder zusätzlich kann die Steuereinrichtung 110 die Ermittlung des Messwerts auch unterbrechen, falls die überwachten Messparameter von den Parametern der erstellten Parameterliste abweichen. Als weitere Alternative oder zusätzliche Funktionalität kann die Steuereinrichtung 110 dazu ausgebildet sein, die Parameter der Messvorrichtung 100 autonom zu ändern, falls die überwachten Messparameter von den Parametern der erstellten Parameterliste abweichen.

Die Messvorrichtung 100 kann insbesondere als Vorrichtung für die thermische Analyse von Materialien ausgebildet sein. Insbesondere kann die Messvorrichtung 100 für die Durchführung von Differenz-Thermoanalysen, dynamischer Differenzkalometrie, dynamisch-mechanischer Analysen, thermomechanischer Analysen oder dergleichen ausgebildet sein. Bei derartigen Messvorgängen kann die Unterstützung eines Benutzers durch die Steuereinrichtung 110 besonders vorteilhaft sein.

Fig. 3 zeigt eine schematische Darstellung eines Systems 10 mit einer Vielzahl an Messvorrichtungen 100 nach einem Ausführungsbeispiel der vorliegenden Erfindung.

Das System 10 umfasst im gezeigten Ausführungsbeispiel insgesamt zwei Messvorrichtungen 100, eine Steuereinrichtung 200 sowie eine Datenbank 300.

Die einzelnen Komponenten des Systems 10 können prinzipiell genauso ausgebildet sein, wie die mit Bezug auf Figur 2 beschriebenen entsprechenden Komponenten. Lediglich die Steuereinrichtung 200 und die Datenbank 300 sind in dem hier gezeigten Ausführungsbeispiel extern von den beiden Messvorrichtungen 100 als eigenständige Geräte ausgebildet. Prinzipiell kann die Datenbank 300 jedoch auch als Unterkomponente der Steuereinrichtung 200 ausgebildet sein.

Da die Steuereinrichtung 200 als eigenständige Vorrichtung ausgebildet ist, kann sie für die Verwendung mit jeder der beiden Messvorrichtungen 100 ausgebildet sein. Bei dieser Konfiguration kann Bestandteil der von der Steuereinrichtung 200 erstellten Parameterliste sein, welche der Messvorrichtungen 100 verwendet werden soll.

In Fig. 3 sind zwei Messvorrichtungen 100 gezeigt. Es sind allerdings beliebige Anzahlen an Messvorrichtungen 100 vorgesehen sein. Insbesondere kann auch vorgesehen sein, eine einzelne Messvorrichtung 100 mit einer externen Steuereinrichtung 200 und/oder einer externen Datenbank 300 zu verwenden.

Die Messvorrichtungen 100 können funktionsgleich ausgebildet sein oder für die Durchführung jeweils unterschiedlicher Messungen ausgebildet sein. Dies erlaubt je nach Anwendungsbereich die zeitgleiche oder sequentielle Durchführung der jeweiligen Messvorgänge.

Die Datenbank 300 wird hier als spezifischer Bestandteil des Systems 10 gezeigt. Es ist jedoch auch denkbar, dass die Steuereinrichtung 200 und/oder die Datenbank 300 mit einem erweiterten Netzwerk, insbesondere mit dem Internet, verbunden ist und relevante Informationen direkt über dieses Netzwerk bezieht anstatt sie lokal abzuspeichern.

### BEZUGSZEICHENLISTE

- 10: System
- 100: Messvorrichtung
- 110: Steuereinrichtung
- 120: Datenbank
- 130: Sensoreinrichtung
- 140: Ausgabeeinrichtung
- 150: Eingabeeinrichtung
- 160: Probenaufnahmeeinrichtung
- 200: Steuereinrichtung
- 300: Datenbank
- M: Verfahren
- M1: Verfahrensschritt
- M2: Verfahrensschritt
- M3: Verfahrensschritt

## Patentansprüche

1. Verfahren (M) zur Steuerung einer Messvorrichtung (100), umfassend
- ein Empfangen (M1) einer Anfrage, einen bestimmten Messwert zu ermitteln, durch eine Steuereinrichtung (110; 200);
- ein Erstellen (M2) einer Parameterliste durch die Steuereinrichtung (110; 200), welche Parameter der Messvorrichtung einzustellen sind, um den bestimmten Messwert ermitteln zu können; und
- ein Ausgeben (M3) der erstellten Parameterliste an einen Benutzer der Messvorrichtung (100) durch die Steuereinrichtung (110; 200).

2. Verfahren (M) nach Anspruch 1, wobei die Anfrage, einen bestimmten Messwert zu ermitteln, weiterhin Informationen bezüglich der gewünschten Messgenauigkeit und/oder Messdauer beinhaltet.

3. Verfahren (M) nach einem der Ansprüche 1 oder 2, wobei die Steuereinrichtung (110; 200) bei dem Erstellen der Parameterliste auf eine Datenbank (120; 300) zurückgreift.

4. Verfahren (M) nach Anspruch 3, wobei die Datenbank (120; 300) eine Vielzahl an Informationen bezüglich Materialeigenschaften und Messmethoden beinhaltet, und die Steuereinrichtung (110; 200) basierend auf dieser Vielzahl an Informationen autonom die Parameterliste erstellt.

5. Verfahren (M) nach einem der Ansprüche 3 oder 4, wobei die Steuereinrichtung (110; 200) nach Ermitteln des Messwerts die Datenbank (120; 300) aktualisiert.

6. Verfahren (M) nach einem der vorhergehenden Ansprüche, weiterhin umfassend
- eine Überwachung von Messparametern während des Ermittelns des Messwerts durch eine Sensoreinrichtung (130) der Messvorrichtung (100); und
- ein Auswerten der überwachten Messparameter durch die Steuereinrichtung (110; 200).

7. Verfahren (M) nach Anspruch 6, wobei die Steuereinrichtung (110; 200) eine Warnung ausgibt, falls die überwachten Messparameter von den Parametern der erstellten Parameterliste abweichen.

8. Verfahren (M) nach einem der Ansprüche 6 oder 7, wobei die Steuereinrichtung (110; 200) die Ermittlung des Messwerts unterbricht, falls die überwachten Messparameter von den Parametern der erstellten Parameterliste abweichen.

9. Verfahren (M) nach einem der Ansprüche 6 bis 8, wobei die Steuereinrichtung (110; 200) die Parameter der Messvorrichtung (100) autonom ändert, falls die überwachten Messparameter von den Parametern der erstellten Parameterliste abweichen.

10. Messvorrichtung (100), welche dazu ausgebildet ist, ein Verfahren (M) nach einem der Ansprüche 1 bis 9 durchzuführen.
